# EUROPEAN PATENT SPECIFICATION

(11) **EP 1 176 655 B1**
(45) Date of publication and mention of the grant of the patent: **19.03.2003**
(21) Application number: 98961260.1
(22) Date of filing: 22.12.1998
(51) Int. Cl.: H01M 8/10, H01M 4/88, C25B 9/00

(54) **MEMBRANE-ELECTRODE ASSEMBLY, AND PRODUCTION PROCESS**
MEMBRANELEKTRODENANORDNUNG UND HERSTELLUNGSVERFAHREN
ENSEMBLE MEMBRANE-ELECTRODE, ET PROCEDE DE PRODUCTION CORRESPONDANT

(43) Date of publication of application: 30.01.2002
(73) Proprietor: DAVID FUEL CELL COMPONENTS, S.L., 40140 Valverde del Majano (Segovia) (ES)
(72) Inventor: CADAVAL FERNANDEZ DE LECETA, Alfonso Carlos, Asua-Erandio (ES); BLACH VIZOSO, Ricardo, Asua-Erandio (ES)
(74) Representative: Carpintero Lopez, Francisco
(86) International application number: PCT/ES98/00351
(87) International publication number: WO 00/038261

(56) References cited:
- EP-A- 0 622 861
- WO-A-95/15016
- US-A- 5 399 184
- MOSDALE, R.; STEVENS. P: 'New electrodes for hydrogen / oxygen solid Polymer electrolyte fuel cell' SOLID STATE IONICS vol. 61, 1993, pages 251 - 255, XP000941140

## Description

### Technical Field

The present invention relates to electrochemical industry in general, and more particularly to membrane-electrode assembly (MEA) on the base of fluoro-containing ion exchange membranes and method of its production. Such MEA are widely used in fuel cells, in water electrolyzers and in other electrochemical processes.

### Background Art

There is already known MEA that consists of fluor-containing ion exchange membrane MF4-SK (Russian trademark [RTM]) and the layers of an electrode material (electrode composition) situated on the both its sides. The electrode composition consists of the mixture of the electrocatalyst and ion exchange polymer [USSR patent 1,258,095 IPC S25V 11/10, 1990]. As an ion exchange polymer in the electrode composition inorganic protonconducting electrolyte (polyantimonic acid, acidic zirconium phosphate) is used. Electrocatalyst is platinum, palladium or rhodium black.

MF-4 SK membrane is a cation exchange membrane [CEM], 300 µm thick made of hydrolyzed copolymer of tetrafluoroethylene with perfluorosulfurogroup containing vinyl ether with the following structure formula:

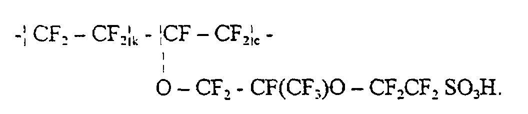

Our experiments showed, that this copolymer has an equivalent weight [EW] 1200 and the degree of crystallinity 12% (see our control example 1).

MEA is produced by applying the electrode composition on the both sides of CEM (the sedimentation method is used). The electrode composition consists of the mixture of electrocatalyst and ion exchange polymer (polyantimonic acid) powders. The composition if fixed by electric current treatment in water at 90°C, the current density is 0.5-1 A/cm².

The produced MEA that consists, for example, of CEM MF-4SK and the layers of electrode composition on the both it's sides with electrocatalyst (platinum black, size of particles 0.01 µm) on the both cathode and anode sides. It has the following characteristics at deionized water electrolysis: the voltage is 2.2V when the current density is 1 A/cm² and the temperature is 100°C. The voltage doesn't change for 1000 hours.

Described MEA has a following advantage: it can work stable during 1000 hours.

The disadvantage of the MEA (USSR patent 1,258,095) is the impossibility to achieve high adhesion between layers of electrode composition and CEM because ion-exchange polymer (polyantimonic acid) is gradually solved after long (more then 1000 hours) electrolysis of water, consequently in long MEA work one can observe a tendency to exfoliation of electrode composition. The method of the MEA production doesn't permit precise regulation of the composition and amount of electrode material applied to CEM. The method is complicated because layers of electrode composition (electrocatalytic layers) are applied by method of sedimentation, which require the following processing with electric current to fix layers on CEM. Electrocatalyst loading required for manufacturing of electrocatalytic layers is rather high: 1-2 mg/cm² on cathode and 4-6 mg/cm² on anode.

It is also known the MEA with porous cathode. Such MEA consists of polymeric ion exchange membrane of Nafion (trademark of CEM by Du Pont) type and porous layer of electrode material - mixture of elecrocatalist particles with binder (Russian Federation [RF] patent 2,015,207, IPC S25V 11/20, 1994), settled down on cathode side of CEM. Porous cathode layer of electrode composition is made of mixture of electrocatalytic particles with binder - polytetrafluoroethylene. Membrane (trademark Nafion) is produced from hydrolysed copolymer tetrafluoroethylene with perfluorinated vinyl ethers containing ion exchange groups. For water electrolysis CEM (by Du Pont) Nafion (R) 120 with ion exchanging groups - SO₃H (see RF patent H (see RF patent tetrafluoroethylene with perfluorinated vinyl ethers containing ion exchange groups. For water electrolysis CEM (by Du Pont) Nafion (R) 120 with ion exchanging groups SO₃ tetrafluoroethylene. Membrane (trademark Nafion) is produced from hydro1248, American Chemical Society, Washington D.C.]

The MEA mentioned above is produced by applying a mixture of electrocatalytic particles and inactive conducting material with the binder (polytetrafluoroethylene) and aluminum powder on aluminum sheet (by technique A). After drying for example at 105°C a sintering at 325°C is carried out for 10 minutes. Then aluminum sheet with the layer of electrode material is placed on the cathode surface of CEM and pressed at 175°C and a pressure of 50-60 kg/cm². After pressing MEA is dipped in the caustic soda solution to dissolve aluminum sheet and aluminum powder (the latter one is used as a promoter of porosity). After that the layer of electrode material become porous. The advantage of the MEA by Russian Federation (RF) patent No. 2,015,207 is that MEA's life time increases because the binder (polytetrafluoroethylene) does not solve during the electrolysis. When such MEA is used for water electrolysis the cell voltage is 1.8-1.9 V.

The disadvantage of the described MEA is that the adhesion between applied porous layer of electrode material and the CEM surface is not as strong as required. During long-time MEA tests the exfoliation of the porous layer of the electrode material happens and the evolving gases delay at the surface between the CEM and the porous layer. This results in an increase of the MEA voltage. Moreover, as it is shown in RF patent (example 4) the disadvantage of the described MEA is a comparatively high electrocatalyst loading because of its particular capsulation by polytetrafluoroethylene during the production (pressing at 325°C and a pressure of 50-60 kg/cm²).

Moreover, the volume porosity of the electrocatalytic layer of the electrode material is uncontrollable, so the transport of gases and liquids in the reaction zone is impeded and electrochemical properties of MEA become worse.

The way of production of described MEA is rather complicated, because high temperature (>300°C) sintering and aluminium lixivitation to form the porous layer of an electrode material are required. Moreover, the production of the MEA by pressing at 175°C leads to the particular destruction of cation exchanging groups that worsens CEM electrochemical characteristics and may result in the destruction of the whole MEA.

The closest on essential set of attributes to the claimed MEA and its method of production is MEA and the way of its production, described in the U.S. patent No. 5,399,184 HOIM 8/10, 1995. MEA, according to the U.S. patent No. 5,399,184 consists of fluorcontaining cation exchange membrane made of tetrafluorethylene hydrolyzed copolymer with fluorsulfurogroup containing vinyl ether with exchange capacity 0.83-1.43 µg-equivalent/g [g-eq/g] (according to the text in the description of the invention to the patent) or 1.12 - 1.43 µg-eq/g (according to the examples and the patent claim) that corresponds to EW 900-1300 and porous layers of an electrode material situated on the both its surfaces. These layers are made of the mixture of electrocatalyst with inactive electroconducting material and fluorpolymer binder. Fluorpolymer binder is cation exchange fluorpolymer which composition is identical to the membrane polymer or it may be polytetrafluoroethylene. CEM is made of hydrolyzed copolymer of tetrafluorethylene with perfluorsulfur containing vinyl ether. Its structural formula is:

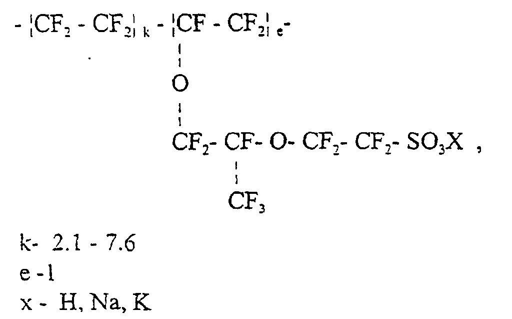

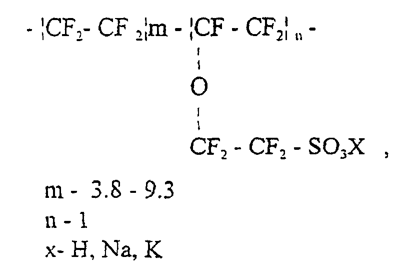

For example, it may be CEM produced by Du Pont - Nafion-117. This membrane is made of copolymer with the degree of crystallinity 12%. [ACS Symposium Perfluorinated lonomer Membranes, Lake Buena Vista, Florida February 23 - 26, 1982 Series 180, pp 217 - 248, American Chemical Society, Washington D.C.]

The specified MEA by prototype (U.S patent 5,399,184) is produced by application the paste of electrode material on the both surfaces of CEM. The latter one consists of the hydrolyzed copolymer of tetrafluoroethylene with perfluorcontaining vinyl ether (EW 900-1300). The paste is made of mixture of inactive electroconducting material (carbon) and electrocatalyst (platinum) with fluorcontaining copolymer binder (with 5% solution of cation exchange fluorcopolymer which has composition close to the fluorcopolymer which CEM is made of or 50% dispersion of polytetrafluoroethylene in aliphatic alcohol). The paste is applied onto one of the CEM surfaces and then onto the other surface (with the following thermal treatment). When 5% solution of cation exchange fluorpolymer «Nafion Solution» like the binder with ionexchange -SO₃H groups (example 1, U.S. patent 5,399,184) is used the paste is treated by 5% water solution of potassium hydroxide before the application to CEM to transform ion exchange groups to -SO₃K. The paste is spread on one of CEM (with - SO₃K groups) surfaces in such a way that the layer of an electrode material after drying would be not more than 10 µm thick. Then the paste is dried at room temperature for 10 minutes and then at vacuum for 30 minutes to remove the solvent. Then the CEM with the paste is placed between polytetrafluoroethylene sheets and pressed at 190°C and a pressure of 50 kg/cm². Then an analogous layer of an electrode material is placed on the other surface of the membrane by the same way. Then MEA is dipped in 5% sulfuric acid solution at room temperature for 16 h to convert ion exchange groups - SO₃K to -SO₃H.

When polytetrafluoroethylene 50% dispersion as fluorpolymeric binder is used in electrode material (see example 5 of U.S. patent 5,399,184), paste of electrode material is applied to a sheet of carbon material, then the sheet is heated at temperature of 325°C within 10 minutes under the pressure. The second sheet is produced in the same way. Electrode material's layers, which were applied to sheets of carbon material, after that are covered with 5% solution of "Nafion Solution" containing groups -SO₃H and then dried. Then carbon sheets are placed on CEM's surface (with sides, which are covered with electrode material facing the CEM) and pressed at temperature of 135°C and pressure of 140 kg/cm² during 60 minutes. MEA produced by the mentioned method has porous layers of electrode material on the surfaces of the CEM.

MEA produced by prototype (U.S patent 5,399,184) is pressed with carbon cloth of paper saturated with polytetrafluorethylene on the both sides and put into a fuel cell. The voltage of the fuel cell at example 1 is 0.75 - 0.77 V, density of current 0.5 A/cm²; in example 5 the voltage is 0.75 - 0.8 V, density of current 0.5 A/cm². Produced MEA can be used not only in fuel cells but also in electrolysis of water.

The disadvantages of prototype MEA are:
1. Not enough high electrochemical characteristics especially at low electrocatalyst loading. The reason is low and uncontrolled porosity of electrode material layers and high degree of cristallinity. Uncontrolled and low porosity of electrode material are caused as porous electrode material layer is formed at a rather high temperature of 190 - 340°C and a pressure of 50 - 120 kg/cm². Our experiments showed that such electrode material layer's porosity is about 35% (see our control example 2).
   Such conditions of MEA production result in deformation and collapse of pores both which are in CEM and were formed in electrode material. It can results in local collapse of membrane. Low and uncontrollable porosity of electrode material layers and high degree of crystallinity make difficult the reactant supply and the remove of reaction products and also achievement of necessary water balance in MEA. It's the reason of relatively high MEA resistance and overvoltage on electrodes finally resulting in fuel cell low voltage or to high electric power consumption if MEA is used in water electrolysis. Besides partially capsulation of electrocatalyst with fluorbinder takes place. It decreases efficiency of electrocatalyst and increases its consumption.
2. Not high adhesion between catalytic layer and CEM decreases of MEA's lifetime. The reason is a long processing the MEA with solution of sulphuric acid what results in significant swelling of catalytic material layers and because of different degree of swelling of porous catalytic layer and CEM. All these lead to exfoliation of catalytic material layers when MEA operates during long time [Journal of Applied Electrochemistry 22 (1992) pp. 1 - 7]. Such processing with sulphuric acid is necessary if the same cation exchange copolymer (with -SO₃K groups) as CEM's copolymer is used as fluorpolymeric binder.

When polytetrafluoroethylene as polymeric binder is used it is almost impossible to reach uniform distribution of electrocatalyst because usually discrete solid lumps of polytetrafluoroethylene are obtained. The lumps block surface of CEM and electrocatalyst, thus areas on the surface of CEM which are fully covered by polytetrafluoroethylene are being created where liquid and gaseous reactants of reaction can not penetrate. Existence of such areas in MEA contributes to exfoliation of electrode material layer from the CEM's surface and deterioration of electrochemical characteristics.

The disadvantage of the MEA produced by prototype is its multistage (6-7 steps) and long duration of the process because only MEA processing by solution of sulphuric acid takes about 16 hours.

### Description of the Invention

Technical result which is achieved by the claimed MEA includes improving of electrochemical characteristics of MEA (especially at low catalyst loading), increase in efficiency of electrocatalyst usage and the life time of the MEA.

The claimed method of MEA production permits to make the process more simple and reduce its duration, ensure the production of MEA with high electrochemical characteristics.

The mentioned technical result is achieved by using fluor-containing cathion exchange membrane made of hydrolysed copolymer of tetrafluorethylene with perfluorsulphurcontaining vinyl ester and probably with the third modifying comonomer which has degree of crystallinity 2-8% and porous layers of electrode material are produced with porosity 40-70%, decreasing in the direction to the surface of CEM with gradient of porosity 5-15% per 1µ. The MEA consists of fluor-containing CEM made of hydrolyzed copolymer tetrafluorethylene with perfluorsulphur containing vinyl ether having EW 900-1300 and porous layers of electrode material made of mixture containing electroconducting inactive material and fluorpolymeric binder located on the both surfaces of CEM.

CEM can be produced of hydrolyzed copolymer tetrafluorethylene with perfluorsulphur containing vinyl ester and the third modifying comonomer which can be chosen from ethylene, perfluor-2-methylen-4-methyl-1,3-dioxolan and perfluoralkyled vinyl ether with C₁ - C₃ alkyl-group.

Porous layers of electrode material are made of mixture containing (in mass %):

| | |
|---|---|
| electrocatalyst | - 20 - 85% |
| electroconducting inactive material | - 10 - 60% |
| cathion exchange fluorcopolymer identical to fluorcopolymer which CEM is made of | - 2 - 8% |
| polytetrafluorethylene | 3-15% |

or layers of electrode material are produced of mixture containing (in mass %):

| | |
|---|---|
| electrocatalyst | - 65 - 95% |
| electroconducting inactive material | - 1 - 35% |
| cathion exchange fluorcopolymer identical to fluorcopolymer which CEM is made of | - 1 - 9% |

The process simplification and reduction of its duration is achieved by usage CEM produced of hydrolysed copolymer of tetrafluorethylene with perfluorsulphurcontaining with degree of crystallinity 2 - 8% for MEA production. The method includes application of electrocatalyst, inactive electro conducting material with fluor-containing binder mixture onto the both surfaces of fluor-containing CEM, which is produced of hydrolyzed copolymer of tetrafluorethylene with perfluorsulphurcontaining vinyl ester with EW = 900 - 1300 with the subsequent thermal treatment. Mixture of electrocatalyst, inactive electroconducting material and 1 - 5% solution of cation exchange fluorcopolymer identical to fluorcopolymer which CEM in organic solvents mixture is applied to the both surfaces of CEM. Heat-treatment is carried out with multistage rise of temperature: from 20 - 35°C to 80 - 100°C. Another CEM can be used, for example CEM produced of hydrolyzed copolymer of tetrafluorethylene with perfluorsulphurcontaining vinyl ether and the third modifying comonomer which can be chosen from ethylene, perfluor-2-methylen-4-methyl-1,3-dioxolan and perfluoralkyled vinyl ester with C₁ - C₃ alkyl-group. Mixture of electrocatalyst, inactive electroconducting material and 1 - 5% solution of cation exchange fluorcopolymer identical to fluorcopolymer which CEM in organic solvents mixture can be applied to the both surfaces of CEM.

The authors of current invention found out that a degree of crystallinity of the hydrolyzed cation exchange fluorcopolymer (from which the cation exchange membrane is made of) has a great influence on electrochemical characteristics of MEA. When the degree of crystallinity of fluorcopolymer is equal to 2-8% there is such water balance in MEA volume which provides necessary inlet of the reagents in MEA and the outlet of the products of the reaction . That causes optimum electrochemical characteristics of MEA.

The degree of crystallinity of fluorcopolymer that is used in MEA may be controlled by the conditions of its synthesis, by addition of the third comonomer or by the conditions of the hydrolysis when copolymer is transforming from nonionic form into cationic exchange form. Both the increase of the degree of crystallinity more than 8% and the decrease less than 2% result in the deterioration of the electrochemical characteristics of MEA.

Formation of the layer with porosity that decreases in the direction of cation exchange membrane with porosity gradient 5-15% per 1 µm helps to reach high electrochemical characteristics of MEA. Authors found out that just such porosity is achieved in the case when the layers of an electrode material which are applied to the membrane surface contain fluorcontaining binder dissolved in the mixture of organic solvents with different boiling points (preferably as a 1-5% solution). The binder is a fluorcopolymer which is identical to fluorcopolymer from which the membrane is made of. Such combination of the fluorcopolymer with the mixture of solvents together with removing of the solvents during multistage increase of the temperature from 20-35°C to 80-100° C provides the necessary porosity gradient with general porosity preferably 40-70% without usage any special methods to reach it.

If the heat treatment is carried out at more than 100°C the necessary porosity could hardly be controlled and the porosity gradient 5-15% could hardly be reached. To carry out the heat treatment at lower than 20°C is unexpedient because the formation of an electrode layer becomes slow and the reaching of the porosity gradient 5-15% is impeded.

When a cation exchange fluorcopolymer (that is identical to fluorcopolymer from which CEM is made of) together with solvents in which CEM fluorcopolymer swells well is used as a binder of an electrode material the strong adhesion between the layer of an electrode material and CEM could be reached. When comparatively mild conditions of heat treatment (not more than 100°C without any pressure) are used to produce MEA not pressing of an electrode material in CEA surface but gluing them together takes place when they are combined. Under the mentioned mild conditions of MEA production CEM is not damaged, the decomposition of fluorcopolymer cation exchange groups doesn't happen so the electrochemical characteristics of CEM do not worsen.

At the claimed MEA cation exchange membrane can be made of hydrolyzed copolymer of tetrafluorethylene with perfluorsulfur containing vinyl ethers with the following structural formula:

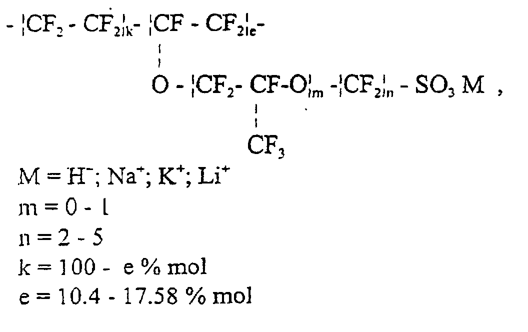

The third modifying comonomer at the mentioned fluorcopolymer could be ethylene, perfluor-2-methylene-4-methyl-1,3-dioxolane, perfluoralkylvinyl ether (with C₁-C₃ in alkyl) e.t.c. The modifying comonomer is brought at the copolymer during the synthesis at amount of 1-5% mol (ethylene -3-5% mol; perfluor-2-methylene-4-methyl-1,3-dioxolane - 1-4%mol; perfluoralkyl ethers with C₁ -C₃ in alkyl -2-5%).

The analogical hydrolyzed copolymers of tetrafluorethylene with perfluorsulfur containing vinyl ethers with the above structural formula are described at the mentioned above analogues and in the prototype and also at RF patent No. 2,077,373 (IPC 6V01D 61/00,1997).

Copolymers (CPL) which were used in the following examples of the realization of the invention are synthesized by the authors. The structural formulae are:

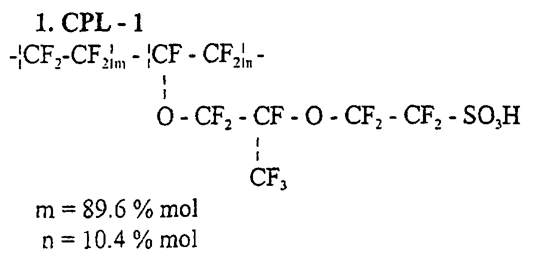

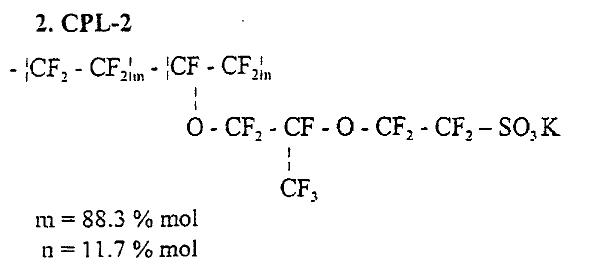

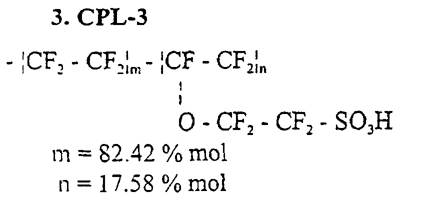

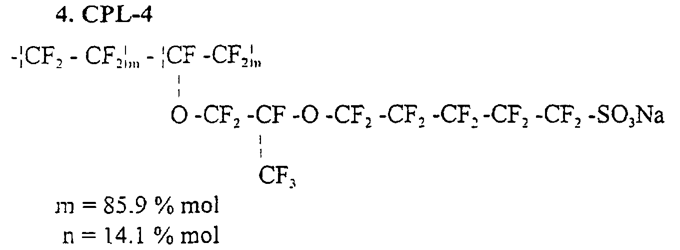

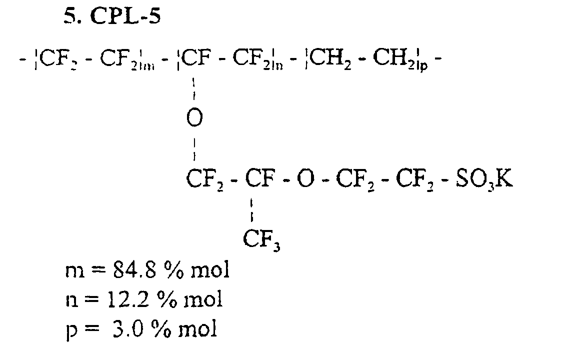

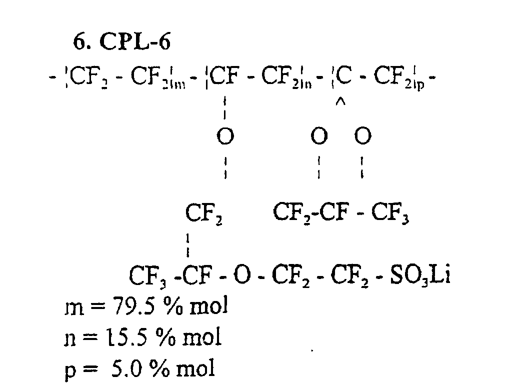

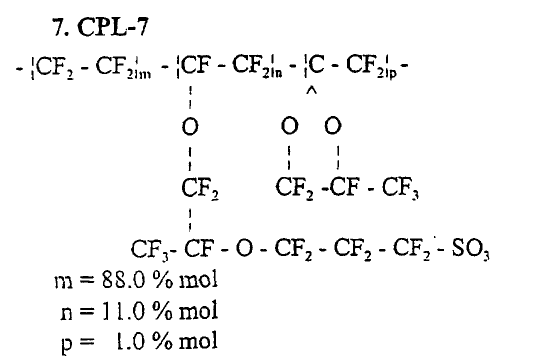

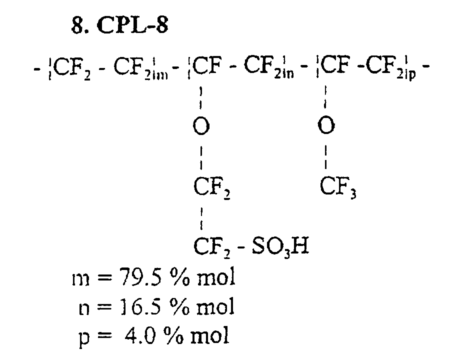

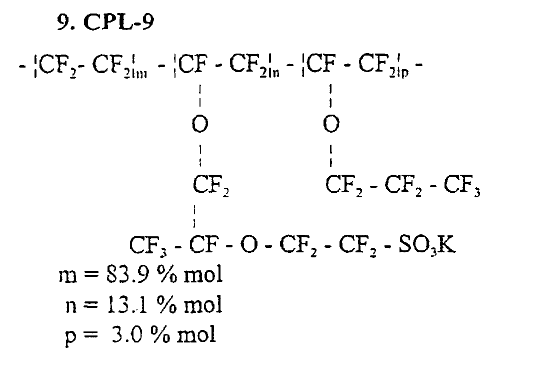

The layer of an electrode material which is applied on the anodic surface of the CEM as electrocatalyst may contain platinum, iridium, IrO₂, mixed oxides IrO₂+RuO₂, IrO₂+RuO₂+TiO₂, IrO₂+RuO₂+SnO₂, PbO₂+IrO₂ and others.

The layer of an electrode material which is applied on the cathodic surface of the CEM as electrocatalyst may contain platinum, palladium or platinum with ruthenium e.t.c.

As inactive electroconductive material the layer of electrode material may contain carbon, lead, lead dioxide e.t.c.

It is expedient to use polytetrafluorethylene F-4D (RTM) [Russian national standard (RNS) 1496-77] in the composition of an electrode material.

Fluorpolymer binder in the composition of an electrode material is a fluorcopolymer with the composition identical to the fluorcopolymer from which CEM is made of. The binder is used as a 1-5% solution in a mixture of organic solvents with different boiling points. The composition of the mixture depends on the composition of the copolymer its equivalent weight and the type of cation exchange group (-SO₃H; -SO₃K; -SO₃ Na;-SO₃Li) that is included in it.

Moreover, the mixture must contain such solvents that there wouldn't be any coagulation of the system when the solution of cation exchange fluorcopolymer is combined with the electrocatalyst and inactive electroconductive material. The mixture of organic solvents must include the solvents with low boiling point 20-60°C [1,1,2-trifluor-1,2,-dichloroethane (freon 123 ); pentane; 1,1,-difluor-1,2-dichloroethene (freon-132B); 1,1,2-trifluorotrichloroethene (freon 113); 1,1,1-trichlorobromoethane (freon-123B); acetone e.t.c.], solvents with middle boiling point 60-100°C [1,1-difluoro-1,2,2-trichloroethane (freon 122); ethanol; hexane; methyl ethyl ketone, benzene, isopropanol; N-propanol; heptane e.t.c. ] and solvents with high boiling point 100-160°C [ isobutanol; N-butanol; toluene; dimethylformamide; cyclohexanone e.t.c.].

If the fluorcopolymer contains cation exchange groups such as -SO₃H group, then the mixture of ethanol with freon-113 and methyl ethyl keton preferably can be used. If there are SO₃K groups then dimethylformamide mixed with ethanol and heptane preferably can be used. For copolymer with -SO₃Li groups the mixture of isopropanol with acetone and freon 123B may be used.

The solution of cation exchange fluorcopolymer is obtained by dissolving the cation exchange fluorcopolymer powder in the mixture of organic solvents then heating and stirring the solution. The dissolving temperature depends on the composition and equivalent weight of copolymer, and also on the boiling points of the used solvents.

The properties of the fluorcopolymer from which CEM is made of and MEA properties were determined in the following way:
1. The composition of the fluorcopolymer was determined by infrared spectroscopy using the spectrometer Perkin-Elmer, 1750.
2. The exchange capacity was determined by titration [RNS 17552-72 and technical conditions (TU) 6.06-041-969-89].
3. The degree of crystallinity was determined by X-ray method using X-ray spectrometer KRM-1.
4. The membrane thickness and the thickness of the layers of an electrode material were determined using the micrometer MK 25-1 (RNS 6507-78).
5. The general porosity and the porosity gradient were determined by the method of ethalone (standard) porometry.

The following examples illustrate the present invention.

### Example 1.

CEM 150 mm in diameter and thickness of 170 µm made of hydrolyzed copolymer tetrafluorethylene with perfluorsulfur containing vinyl ether (CPL-1) with the degree of crystallinity 8%, EW = 1200 with cation exchange groups -SO₃H is used to produce MEA.

The production of an electrode material. 0.24 g of electrocatalyst (platinum) deposited on the surface of 0,58 g inactive electroconductive material [acetylene black with size of particles 0.01 µm (TU 14-7-24-80)] are mixed in a glass vessel with 0,1g of polytetrafluorethylene and 0.08g of fluorcopolymer CPL-1 as a 3% solution in the mixture of ethanol, freon-13 and methyl ethyl keton (mass ratio 5:2:3). The fluorcopolymer contains - SO₃H cation exchange groups and it is identical to the CEM copolymer. The obtained viscous compound is applied on one of air-dried surfaces of the CEM by spraying a layer of such thickness, that after drying an electrocatalyst loading would be not more than 0.3 µg/cm². Then CEM is put at a thermostat and heat treated with the following multistage increase of the temperature: 20°C for 10 minutes, then 60°C for 40 minutes and 80°C for 20 minutes. Then CEM is put out of the thermostat, cooled to the room temperature and the same electrode material is applied to another surface of CEM by the same way. The produced MEA contains CEM of CPL-1 170µm thick with the layers of an electrode material situated on the both it's sides. The electrocatalyst loading is 0.3 mg/cm².

The layers of an electrode material contains (mass %):

| | |
|---|---|
| electrocatalyst | -24% |
| inactive electroconductive material | -58% |
| cation exchange fluorcopolymer CPL-1 | -8% |
| tetrafluorethylene | -10% |

the general porosity 40% with the porosity gradient 5% per 1µm.

The produced MEA is tested at a fuel cell by the following way: on the both surfaces of the electrode layers of produced MEA the carbon cloth TMP-5 (RTM) saturated with polytetrafluorethylene dispersion (TU 6-05-1246-81) is applied and then compressed. Then the aggregate is put into the fuel cell. The test is carried out at 80°C, the following gases are added into the fuel cell: hydrogen at anode compartment with a pressure of 2.5 atm and oxygen to the cathode compartment with a pressure of 5 atm.

The following results are obtained:

| | |
|---|---|
| cell voltage | 0.77-0.78 V |
| current density | 0.5 A/cm² |

The fuel cell was operating stable for 3000 hours, then the test was interrupted and the MEA was put out. The exfoliation of the layer of an electrode material wasn't observed by visual survey. When the MEA was returned into the fuel cell its parameters did not change.

### Example 2.

CEM 50 mm in diameter and thickness of 100 µm made of hydrolyzed copolymer tetrafluorethylene with perfluorsulfure containing vinyl ether and perfluormethylvinyl ether (CPL-8) with the degree of crystallinity 6%, EW = 1100 with cation exchange groups -SO₃H is used to produce MEA.

The production of an electrode material. 0.85 g of electrocatalyst (platinum with particle size 0.05µm) and 0.1 g of inactive electroconductive material (acetylene black, size of particles 0.015µm) are mixed in a glass vessel. Then 0.03g of polytetrafluorethylene (RNS 1491-77) and 0.02g of fluorpolymer as a 2% solution in the mixture of dimethylformamide with ethanol and freon-123B (mass ratio 1:8:1) are added to the obtained particles of platinum which were mixed with the carbon. The fluorcopolymer is identical to the CEM copolymer (CPL-8). The obtained viscous composition is applied on one of air-dried surfaces of the CEM by drawing a layer of such thickness, that after drying an electrocatalyst loading would be not more than 0.3 mg/cm². Then CEM is put into a thermostat and heated with the following multistage increase of the temperature: 20-35°C for 10 minutes, then 50°C for 30 minutes and 100°C for 30 minutes. Then CEM is put out of the thermostat, cooled to the room temperature and the same electrode material is applied to another surface of CEM by the same way. The produced MEA contains CEM of CPL-8 100µm thick with the layers of an electrode material situated on the both its sides. The electrocatalyst loading is 0.3 mg/cm².

The layers of an electrode material contains (mass%):

| | |
|---|---|
| electrocatalyst | -85% |
| inactive electroconductive material | -10% |
| cation exchange fluorcopolymer CPL-8 | -2% |
| polytetrafluorethylene | -3% |

the general porosity 50% with the porosity gradient 12% per 1µm.

The produced MEA is tested at a fuel cell by the following way: on the both surfaces of the electrode layers of produced MEA the carbon cloth saturated with polytetrafluorethylene dispersion is applied.

The following results are obtained:

| | |
|---|---|
| cell voltage | 0.79-0.81 V |
| current density | 0.5 A/cm² |

The fuel cell was operating stable for 3000 hours, then the test was interrupted and the MEA was put out. The exfoliation of the layer of an electrode material wasn't observed by visual survey. When the MEA was returned into the fuel cell its parameters did not change.

### Example 3.

CEM 80 mm in diameter and thickness of 230 µm made of hydrolyzed copolymer tetrafluorethylene with perfluorsulfure containing vinyl ether (CPL-4) with the degree of crystallinity 3%, EW = 1000 with cation exchange groups -SO₃Na is used to produce MEA.

The production of an electrode material. 0.95 g of electrocatalyst (platinum, the size of particles 0.05µm) and 0.01 g of inactive electroconductive material (acetylene black, size of particles 0.01µ) are mixed in a glass vessel. Then 0.04g of fluorcopolymer TM-4 as a 1% solution in the mixture of dimethylformamide with ethanol and acetone (mass ratio 1:7:2) is added to the obtained particle's mixture. The fluorcopolymer contains -SO₃Na cation exchange groups. The obtained viscous composition is applied on one of air-dried surfaces of the CEM by drawing a layer of such thickness, that after drying an electrocatalyst loading would be not more than 0.15 mg/cm². Then CEM is put into a thermostat and heat treated with the following multistage increase of the temperature: 20-40°C for 15 minutes, then 70°C for 40 minutes and 100°C for 30 minutes. Then CEM is put out of the thermostat, cooled to the room temperature and another mixture is applied to another surface of CEM by the same way. The latter mixture contains 0.95 g of electrocatalyst (iridium, the size of particles 0.01µ) and 0.01 g of lead with oxidized surface (size of particles 0.3µm) and 0.04g of fluorcopolymer CPL-4 as a 1% solution in the mixture of dimethylformamide with ethanol and acetone (mass ratio 1:7:2). The fluorcopolymer contains -SO₃Na cation exchange groups.

The produced MEA contains CEM of CPL-4 230µm thick with the layers of an electrode material situated on both sides. The anode electrocatalyst loading is 0.45 mg/cm².

The layers of an electrode material contains (mass%):

| | |
|---|---|
| electrocatalyst | -95% |
| inactive electroconductive material | -1% |
| cation exchange fluorcopolymer CPL-4 | -4% |

the general porosity 45% with the porosity gradient 8% per 1µm.

The produced MEA is tested at a water electrolysis by the following way. Current collectors made of porous titanium (porosity 26%) are applied the both sides of MEA. The essembley is packed using using two metal plates, pressed to each other with screws , dived into the vessel of water and treated by current 0.5-1 A/cm² at 90°C for 1 hour. The produced MEA is put into a cell for electrolysis of deionized water. The voltage at the cell was 1.71 V, current density 1 A/cm² and 100°C

The device was operating stable for 2000 hours, then the test was interrupted and the MEA was put out. The exfoliation of the layer of an electrode material wasn't observed by visual survey. When the MEA was returned into the cell its parameters did not change.

### Example 4.

CEM 50 mm in diameter and thickness of 200 µm made of hydrolyzed copolymer tetrafluorethylene with perfluorsulfur containing vinyl ether (CPL-2) with the degree of crystallinity 7%, EW = 1300 with cation exchange groups -SO₃K is used to produce MEA.

For production of an electrode material 0.65 g of electrocatalyst (platinum) is deposited on the surface of 0,18g inactive electroconductive material (acetylene black, particle size 0.01 µm) and particles are mixed in a glass vessel. Then 0.15g polytetrafluorethylene and 0.02g of fluorcopolymer CPL-2 as a 2.7% solution in the mixture of isoproranol, freon-123a and ciclohexanone (mass ratio 7:4:1) is added to the obtained particle's mixture. The fluorcopolymer contains -SO₃K cation exchange groups and it is identical to the CEM copolymer. The obtained viscous composition is applied on one of air-dried surfaces of the CEM by spraying a layer of such thickness, that after drying an electrocatalyst loading 0.3 mg/cm². Then CEM is put at a thermostat and heat treated with the following multistage increase of the temperature: 25°C for 15 minutes, then 70°C for 40 minutes and 95°C for 20 minutes. Then CEM is put out of the thermostat, cooled to the room temperature and the same electrode material is applied to another surface of CEM by the same way. The produced MEA contains CEM of CPL-2 200 µm thick with the layers of an electrode material situated on both sides. The electrocatalyst loading is 0.3 mg/cm².

The layers of an electrode material contains (mass%):

| | |
|---|---|
| electrocatalyst | -65% |
| inactive electroconductive material | -18% |
| cation exchange fluorcopolymer CPL-2 | -2% |
| polytetrafluorethylene | -15 |

the general porosity 70% with the porosity gradient 15% per 1µm.

The produced MEA is tested at a fuel cell by the following way: on the both surfaces of the electrode layers of produced MEA the carbon cloth saturated with polytetrafluor ethylene dispersion (TU 6-05-1246-81) is applied and then compressed. Then the aggregate is put into the fuel cell. The test is carried out at 80°C and the following gases are added into the fuel cell: hydrogen at anode compartment with a pressure of 2.5 atm and oxygen to the cathode compartment with a pressure of 5 atm.

The following results are obtained:

| | |
|---|---|
| cell voltage | 0.77-0.78 V |
| current density | 0.5 A/cm² |

The fuel cell was operating stable for 3000 hours, then the test was interrupted and the MEA was put out. The exfoliation of the layer of an electrode material wasn't observed by visual survey. When the MEA was returned into the fuel cell its parameters did not change.

### Example 5

CEM 50 mm in diameter and thickness of 150 µm made of hydrolyzed copolymer tetrafluorethylene with perfluorsulfur containing vinyl ether (CPL-3) with the degree of crystallinity 2%, EW = 900 with cation exchange groups -SO₃H is used to produce MEA.

For the production of an electrode material. 0.1 g of electrocatalyst (platinum) is deposited on the surface of 0.3 g of inactive electroconductive material (acethylene black, size of particles 0.01 µ) and particles are mixed in a glass vessel. Then 0.06g polytetrafluorethylene (RNS 1496-77) and 0.04g of fluorcopolymer CPL-3 as a 5% solution in the mixture of pentane, N-propanol and N-butane (mass ratio 1:1:1) is added to the obtained particles. The fluorcopolymer contains -SO₃H cation exchange groups and it is identical to the CEM copolymer. The obtained viscous composition is applied on one of air-dried surfaces of the CEM by drawing a layer of such thickness, that after drying an electrocatalyst loading would be 0.3 mg/cm². Then CEM is put into a thermostat and heat treated with the following multistage increase of the temperature: 30°C for 20 minutes, then 55°C for 30 minutes and 90°C for 20 minutes. Then CEM is put out of the thermostat, cooled to the room temperature and the same electrode material is applied to another surface of CEM by the same way. The produced MEA contains CEM of CPL-3 150 µm thick with the layers of an electrode material situated on both sides. The electrocatalyst loading is 0.3 mg/cm².

The layers of an electrode material contains (mass%):

| | |
|---|---|
| electrocatalyst | -20% |
| inactive electroconductive material | -60% |
| cation exchange fluorcopolymer CPL-3 | -8% |
| polytetrafluorethylene | -12% |

the general porosity 45% with the porosity gradient 10% per 1 µm.

The produced MEA is tested in fuel cell in the following way: on the both surfaces of MEA electrode layers carbon sheets saturated with polytetrafluorethylene dispersion (TU 6-05-1246-81) are placed, then pressed. The assembly is put into the fuel cell. MEA test is carried out at 80°C and supplying gases to the fuel cell: hydrogen - to anode camera at pressure of 5atm, oxygen to cathode camera at pressure 25atm. The following characteristics are obtained:

| | |
|---|---|
| voltage at the cell, V | - 0.78 - 0.80 |
| current density, A/cm² | - 0.5 |

The fuel cell was operating stable for 3000 hours, after that the test was interrupted and MEA was put out. There was no electrode material exfoliation from CEM observed by visual survey. When the MEA was returned into the fuel cell its parameters did not change.

### Example 6

CEM 50mm in diameter and thickness 170 µ, made of hydrolyzed copolymer of tetrafluorethylene with perfluorsulfurcontaining vinyl ester and ethylene (CPL-4) with - SO₃Na cation exchange groups with the degree of crystallinity 8%, EW = 1250 is used for MEA production. To produce electrode material for cathode 0.65g of catalyst (platinum, size of particles 0.05 µm) and 0.34g of acetylene black (size of particles 0.01 µm) are mixed in a glass vessel. Then 0.01g of fluorcopolymer (CPL-4) with -SO₃Na cation exchange groups identical to copolymer of CEM in the form of 1.7% solution of freon-123V (RTM) ethanol and isobutylene (mass ratio 2:5:5) are added to the obtained particles. Obtained viscous composition of electrode material is applied to an air-dry surface of CEM by the method of composition pouring with a such thickness that electrocatalyst loading would be 0.3 mg/cm². Then CEM is put into a thermostat and heat treated with the following multistage increase of the temperature: at 30°C for 20 minutes, at 50°C - 30 minutes, at 100°C - 15 minutes. After that CEM is put out of thermostat than cooled to the room temperature and another surface is covered in the same way with anode material produced as in example 3. Then CEM is put to a thermostat and heat-treated in the mentioned way. Produced MEA contains CEM (CPL-4) with thickness of 170 µm, the both it's sides are covered with an electrode material layers with electrocatalyst loading 0.15 mg/cm² at the cathode and 0.45 mg/cm² at the anode. These layers consist of (in mass %):

| | |
|---|---|
| electrocatalyst | - 65 |
| electroconducting inactive material | - 34 |
| cationic-exchange fluorcopolymer CPL-4 | - 1 |

and its general porosity is 63% with gradient of porosity 13% per 1 µm.

The produced MEA is tested at electrolysis of deionizated water.

Current collectors made of porous titanium are applied to MEA on the both sides. The produced MEA is settled into the cell for electrolysis of deionizated water. The cell voltage on the cell is 1.73 - 1.75 V and current density 1 A/cm² at temperature 100°C.

The electrolyzer was operated stable for 2000 hours than the test was interrupted and MEA was put out. There was no electrode material exfoliation from CEM observed at visual survey. When the MEA was returned into the cell it's parameters did not change.

### Example 7

CEM 50mm in diameter and thickness 23 µm made of hydrolyzed copolymer of tetrafluorethylene with perfluorsulfogroup containing vinyl ether and perfluoroxalate (CPL-6) with - SO₃Li cationexchange groups with the degree of crystallinity 4%, EW = 1000 is used for MEA production. To produce electrode material 0.76g of catalyst (palladium, size of particles 0.08 ) and 0.15g of coal (size of particles 0.001µm) are mixed in glass vessel. Then 0.09g of fluorcopolymer (CPL-6) with -SO₃Li cation exchange groups identical to copolymer of CEM in the form of 2.65% solution of freon-122, acetone and isopropanol (mass ratio 2:7:1) are added to the obtained particles. Obtained viscous composition of electrode material is applied to an air-dry surface of CEM by the method of composition pouring with a such thickness that electrocatalyst loading would be 0.15 mg/cm². Then CEM is put to a thermostat and heat treated with the following multistage increase of the temperature: at 20°C during 20 minutes, at 40°C - 30 minutes. After that CEM is put out of thermostat then cooled to room temperature.

| Composition of cathode layer (in mass %): | |
|---|---|
| electrocatalyst | - 76 |
| electroconductive inactive material | - 15 |
| cationexchange fluorcopolymer (CPL-6) in mixture with freon-122, acetone and isopropanol | - 0.5 |

Cathode has general porosity 48% with gradient of porosity 9% per 1 µm.

After that 0.90g of mixed oxide IrO₂ - RuO₂ with IrO₂ contents 80% (size of particles 0.05 µm) and 0,01g of inactive electroconducting material - PbO₂ are mixed in glass vessel with 0.09g of fluorcopolymer (CPL-6) with -SO₃Li cation exchange groups identical to copolymer of CEM in the form of 2.6% solution mixed with freon-122, acetone and isopropanol (mass ratio 2:7:1).

The obtained mixture is applied to another surface of CEM. Then CEM is put to the thermostat and dried as mentioned above. After that CEM is put out of thermostat and cooled to room temperature.

| Composition of anode layer (in mass %): | |
|---|---|
| electrocatalyst | - 90% |
| cation exchange fluorcopolymer | - 9% |
| inactive electroconducting material | -1% |

The anode catalyst loading - 0,45 mg/cm². The layer has general porosity 42% with gradient of porosity 5% per 1 µm.

The produced MEA is tested at electrolysis of deionizated water.

Current collectors made of porous titanium are applied to MEA on the both sides. The assembly is compressed using two metal plates, pressed with each other by screws than dived into vessel with water and treated by electric current 0.5 -1 A/cm² at 90°C for 1 hour. The produced MEA is settled into the cell for electrolysis of deionizated water. The cell voltage is 1.76 V and current density 1 A/cm² at 100°C.

The electrolyzer was operated stable for 2000 hours than the test was interrupted and MEA was put out. There was no electrode material exfoliation from CEM observed at visual survey. When the MEA was returned into the cell its parameters did not change.

### Example 8

CEM 50mm in diameter and thickness 180 µm made of hydrolyzed copolymer of tetrafluorethylene with perfluorsulfurcontaining vinyl ester and perfluorinated vinyl ether (CPL-9) with - SO₃K cationexchange groups with the degree of crystallinity 7.5%, EW = 1150 is used for MEA production. To produce electrode material 0.9g of catalyst (mixture of platinum and ruthenium, size of particles 0.05 µm) and 0.03g of coal (size of particles 0.001 µm) are mixed in glass vessel. Then 0.07g of cation exchange fluorcopolymer (CPL-9) with SO₃K cationexchange groups - identical to copolymer of CEM in the form of 4.0% solution of freon-113, ethanol and cyclohexanol (mass ratio 1:10:1) are added to the obtained particles. Obtained viscous composition of electrode material is applied to an air-dry surface of CEM by the method of composition drawing with a such thickness that electrocatalyst loading would be 0.15 mg/cm². Then CEM is put to a thermostat and heat treated with the following multistage increase of the temperature: at 20°C during 20 minutes, at 60°C - 20 minutes, at 90°C - 30 minutes. After that CEM is put out of thermostat than cooled to the room temperature and another surface is covered in the same way by anode material which consists of 0.9 g of catalyst [mixed oxide IrO₂ + PbO₂ (PbO₂ - 5%) with size of particles 0.03 µm] and 0.03g of oxidized lead (size of particles 0.08 µm) and 0.07g of cation exchange fluorcopolymer (CPL-9) with -SO₃K cationexchange groups identical to copolymer of CEM as 4.0% solution of freon-113, ethanol and cyclohexanol (mass ratio 1:10:1). The anode electrocatalyst loading is 0,45 mg/cm². Produced MEA contains CEM made of copolymer (CPL-9) with thickness of 180 µm. These layers consist of (in mass %):

| | |
|---|---|
| electrocatalyst | - 90 |
| electroconductive inactive material | - 3 |
| cation exchange fluorcopolymer (SPL-9) | - 7 |

and cathode layer general porosity is 50% with gradient of porosity 7% per 1 and anode layer general porosity is 56% with gradient of porosity 12% per 1 µm.

The produced MEA is tested at electrolysis of deionizated water.

Current collectors made of porous titanium are applied to MEA on the both sides. The assembly is compressed using two metal plates, pressed to each other with screws dived into vessel with water and treated by electric current 0.5 - 1 A/cm² at 90°C for 1 hour. The produced MEA is settled into the cell for electrolysis of deionizated water. The cell voltage is 1.72 - 1.74 V and current density 1 A/cm² at 100°C.

The electrolyzer was operated stable for 2000 hours than the test was interrupted and MEA was put out. There was no electrode material exfoliation from CEM observed at visual survey. When the MEA was returned into the cell it's parameters did not change.

### Example 9

CEM 50mm in diameter and 150 mm thick made of hydrolyzed copolymer of tetrafluorethylene with perfluorsulfur containing vinyl ether and perfluordioxalate (CPL-7) with - SO₃H cationexchange groups, degree of crystallinity 1%, EW = 850 is used for MEA production. To produce electrode material 0.91g of catalyst (palladium, size of particles 0.08 µm) and 0.09 g of fluorcopolymer (CPL-7) with -SO₃H cation exchange groups identical to copolymer of CEM in the form of 5% solution of freon-122a (RTM), methylethylcetone and isobutanol (mass ratio 1:1:9) are added to the obtained particles. Obtained viscous compound of electrode material is applied to an air-dry surface of CEM by the method of composition pouring with such thickness that electrocatalyst loading would be 0.15 mg/cm² after drying. Then CEM is put to a thermostat and heat-treated with the following multistage increase of the temperature: at 20°C during 10 minutes, at 40°C - 20 minutes, at 100°C - 30 minutes. After that CEM is put out of the thermostat than cooled to the room temperature and another surface is covered in the same way with the following mixture: 0.91g of catalyst (mixed IrO₂ + RuO₂ + SnO₂, mass ratio % 80:15:5, size of particles 0.05 and 0.09g of fluorcopolymer (CPL-7) with -SO₃H cation exchange groups identical to copolymer of CEM in the form of 5% solution of freon-122a, methylethylcetone and isobutanol (mass ratio 1:1:9). Obtained compound is applied to another surface of CEM then CEM is put to a thermostat and heat treated as mentioned above. Anode electrocatalyst loading is 0,45mg/cm². Produced MEA contains CEM made of copolymer (CPL-7) with the thickness of 150 µm and layers of electrode material covering the both surfaces of CEM. These layers consist of (in mass %):

| | |
|---|---|
| electrocatalyst | - 91 |
| electroconducting inactive material | - 0 |
| cationexchange fluorcopolymer (CPL-7) | - 9 |

and it's general porosity is 61% with gradient of porosity 13% per 1 µm.

The produced MEA is tested at electrolysis of deionizated water.

Current collectors made of porous titanium are applied to the both sides of MEA. The assembly is compressed using two metal plates, pressed with each other with screws then dived into vessel with water and treated by electric current 0.5 -1 A/cm² at 90°C for 1 hour. The produced MEA is settled into the cell for electrolysis of deionizated water. The cell voltage is 1.82 - 1.84 V and current density 1 A/cm² at 100°C.

The electrolyzer was operated stable for 2000 hours than the test was interrupted and MEA was put out. There was no electrode material exfoliation from CEM observed at visual survey. After the MEA was returned to the cell the voltage increased up to 1,86-1,88 V.

Example 9 shows that if the MEA does not have the claimed composition it has a worse parameters.

### Control example 1

CEM 50mm in diameter and 300 µm thick made of hydrolyzed copolymer of tetrafluorethylene with perfluorsulfur containing vinyl ether (RTM MF4-SK) with - SO₃H cationexchange groups with the degree of crystallinity 12%, EW = 1200 is used for MEA production. To produce electrode material 0.5g of catalyst (platinum, size of particles 0.05 µm) and 0.055g of copolymer (MF-4 SK) with -SO₃H cationexchange groups identical to copolymer of CEM as 1.8% solution in mixture of dimethylacetamide, ethanol and acetone (mass ratio 1:7:2) are mixed in glass vessel. Obtained viscous composition of electrode material is applied to one of an air-dry surface of CEM by the method of drawing with a such thickness that electrocatalyst loading would be 0.15 mg/cm². Then CEM is put to a thermostat and heat treated with the following multistage increase of the temperature: at 20-35°C for 15 minutes, at 70°C - 40 minutes, at 100°C - 30 minutes. After that CEM is put out of thermostat than cooled to room temperature. The composition of cathode layer (in mass %):

| | |
|---|---|
| electrocatalyst | - 91 |
| cation exchange fluorcopolymer identical to copolymer of CEM | - 9 |

Cathode has general porosity 26% with gradient of porosity 0% per 1 µm.

After that 0.5g of iridium (size of particles 0.01) and 0.055g of copolymer (RTM MF-4 SK) with -SO₃H cation exchange groups identical to copolymer of CEM in the form of 1.8% solution in mixture of dimethylacetamide, ethanol and acetone (mass ratio 1:7:2) are mixed in glass vessel. Obtained viscous compound of electrode material is applied to another air-dry surface of CEM with method of pouring with such thickness that electrocatalyst loading would be 0.45 mg/cm². Then CEM is put to a thermostat and heat treated as mentioned above. The composition of anode layer (in mass %):

| | |
|---|---|
| electrocatalyst | - 91 |
| cation exchange fluorcopolymer identical to copolymer of CEM | - 9 |

Cathode has general porosity 26% with gradient of porosity 0% per 1 µm.

The produced MEA is tested at water electrolysis.

Current collectors made of porous titanium are applied to the both sides of MEA. The assembly is compressed using two metal plates, pressed with each other with screws then dived into vessel with water and treated by electric current 0.5 -1 A/cm² at 90°C for 1 hour. The produced MEA is settled into the cell for electrolysis of deionizated water. The cell voltage is 1,91 V and current density 1 A/cm² at 100°C.

The electrolyzer was operating for 1000 hours with the increase of the voltage to 1,95 V and than the test was interrupted and MEA was put out. Tendency for exfoliation of electrode layer was found at visual survey. After the MEA was returned to the cell the voltage increased up to 2,03 V.

### Control example 2

CEM 50mm in diameter and thickness 140 µm (in solid state) made of hydrolyzed copolymer tetrafluorethylene with perfluorsulfur containing vinyl ester (trademark Nafion-117) with - SO₃K cation exchange groups with the degree of crystallinity 12%, EW = 1100 is used for MEA production.

For electrode material production 0.1g (20% mass) of catalyst (platinum, size of particles 0.05 µm), 0.3g of coal (average size of particles 25A) and 0.1g of fluorpolymer with cation exchange groups in the form of 5% solution (trademark Nafion Solution) of fluorpolymer with -SO₃H cation exchange groups identical to copolymer which CEM is produced of in isopropanol (mass ratio of catalyst and copolymer 3:1:1) are mixed in glass vessel. The composition is stirred into homogeneous state. Then obtained viscous composition was processed with 5% solution of KOH for -SO₃H groups of copolymer transformation to SO₃K groups. The obtained paste was uniformly applied to one of the CEM surfaces using device with aperture for paste extrusion so that electrode layer thickness was 10 µm. Then CEM covered with catalytic layer is dried at room temperature (20°C) for 10 minutes then at room temperature and a pressure of 10 mm of Hg for 30 minutes. The produced CEM with electrode material layer was between teflon plates 10mm in thickness then treated by electric heater to 190°C and compressed at 190°C and 50 kg/cm² for 30 minutes. After that the assembly was cooled, CEM was put out and another surface was covered in the same way with the same electrode material. The electrode material was fixed as mentioned above. The produced MEA contains CEM (trademark Nafion-117) with - SO₃K cation exchange groups and with electrode material layers on the both surfaces so that electrode material loading would be 0.3 mg/cm². Electrode material contains (in mass %):

| | |
|---|---|
| electrocatalyst | - 20 |
| inactive electroconductive material | - 60 |
| cation exchange copolymer identical to copolymer (trade mark Nafion-117) with -SO₃K cation exchange groups | - 20 |

Produced MEA is dived into 3% solution of sulphuric acid and kept there at room temperature for 16 hours. -SO₃K groups are transformed into -SO₃H. The MEA has general porosity 29% with gradient of porosity 0% per 1 µm.

The produced MEA is tested at a fuel cell in the following way: on the both surfaces of MEA electrode layers carbon sheets saturated with polytetrafluorethylene dispersion (TU 6-05-1246-81) are placed, then compressed. The assembly is put into the fuel cell. MEA test is carried out at 80°C and the following gases are supplied at the fuel cell: hydrogen - to anode compartment at a pressure of 2.5atm, oxygen to cathode compartment at a pressure of 5atm. The following characteristics are obtained:

| | |
|---|---|
| voltage at the cell, V | - 0.72 - 0.75 |
| current density, A/cm² | - 0.5 |

The electrolyzer was operating stable for 1000 hours than the test was interrupted and MEA was put out. Electrode layer exfoliation was found at visual survey. After the MEA was returned to the cell the voltage reduced to 0,65 V.

As shown in given examples the claimed MEA has a better electrochemical characteristics then already known MEAs. Thus when using the claimed MEA in a fuel cell its voltage is 0.77 - 0.8 V and current density 0.5 A/cm² meantime the cell voltage is not more than 0.75 V and current density 0.5 A/cm² for MEA obtained by prototype at low catalyst loading.

Because of it's low resistance and efficient catalyst loading at water electrolysisthe claimed MEA has voltage not more than 1.75 V. That is less than for known MEAs with the same electrocatalyst loading.

The claimed method of MEA production that is possible to use in a fuel cell and electrolysis of water is not complicated, takes less time and CEM is not damaged. Besides, strong adhesion between electrode layer and CEM is achieved. Particles of the catalyst are not capsulated by fluorpolymeric binder and they are uniformly distributed in all volume of electrode layer what contributes to efficient catalyst loading and increases the life-time of fuel cells and electrolyzers especially if their assembling-deassembling (for repairing for example) during the operation take place.

## Claims

1. Membrane-electrode assembly (MEA) that consists of fluoro containing cation exchange membrane made of hydrolysed copolymer of tetrafluoroethylene with perfluorsulfurcontaining vinyl ether with EW = 900 - 1300 and porous electrode material layers made of electrocatalyst, electroconductive inactive material and fluoropolymeric binder situated on the both surfaces of cation exchange membrane, wherein the fluor-containing cation exchange membrane is produced of hydrolysed copolymer of tetrafluoroethylene with perfluorsulfurcontaining vinyl ether, which has a degree of crystallinity of 2 - 8%, and the porous electrode material layers are produced with a porosity of 40 - 70%, that decreases in the direction of cation exchange membrane surface with a gradient of porosity of 5 - 15% per 1 µm.

2. Membrane-electrode assembly in accordance with claim 1, **characterized in that** the fluor-containing cation exchange membrane is produced of hydrolysed copolymer of tetrafluorethylene with perfluorosulfurcontaining vinyl ester and a third modifying comonomer chosen from the following ones: ethylene, perfluoro-2-methylen-4-methyl-1,3-dioxolane and perfluoroalkylated vinyl ester with C₁ - C₃ alkyl-group.

3. Membrane-electrode assembly in accordance with claims 1 and 2, **characterized in that** the porous electrode material layers are produced of a mixture containing (mass %): 20%-85% of electrocatalyst, 10%-60% of electroconductive inactive material, 2%-8% of cation exchange fluorcopolymer, identical to the fluorcopolymer from which cation exchange membrane is produced, having 3%-15% of polytetrafluoroethylene.

4. Membrane-electrode assembly in accordance with claims 1 and 2, **characterized in that** the electrode material porous layers are produced of a mixture containing (mass %): 65%-95% of electrocatalyst, 1%-35% of electroconducting inactive material, 1%-9% of cationic-exchange fluorcopolymer identical to fluorocopolymer of which cationic-exchange membrane is produced.

5. A method for producing a membrane-electrode assembly (MEA) which includes applying the mixture of electrocatalyst and electroconducting inactive material with a fluorcontaining polymeric binder to both surfaces of the cation exchange membrane, which is produced of hydrolysed copolymer of tetrafluoroethylene with perfluorosulfurcontaining vinyl ether with EW = 900 - 1300 and heat-treatment; the method being **characterized in that** a mixture of electrocatalyst, electroconducting inactive material and 1 - 5% solution of cation exchange fluorocopolymer, identical to fluorocopolymer of which the cationic-exchange membrane is produced, in organic solvents is applied on both surfaces of the cation exchange membrane and heat-treating is carried out with multistage increase of the temperature: from 20 - 35°C to 80 - 100°C, so that the porosity of the electrode layers decreases towards the surface of the cationic-exchange membrane, at a rate of 5-15% per 1µm.

6. A method of membrane-electrode assembly production in accordance with claim 5, **characterized in that** the cationexchange membrane is produced of hydrolysed copolymer of tetrafluoroethylene with perfluorosulfurcontaining vinyl ester and the third modifying comonomer chosen from the following ones: ethylene, perfluor-2-methylen-4-methyl-1,3-dioxolan and perfluoro-alkylated vinyl ester with C₁ - C₃ alkyl-group is used.

7. A method of membrane-electrode assembly production in accordance with claims 5 and 6, **characterized in that** the mixture of electrocatalyst, electroconducting inactive material and 1 - 5% solution of cation exchange fluorocopolymer, identical to fluorocopolymer which cation exchange membrane is produced of, is mixed with inorganic solvents and applied to both sides of the cation exchange membrane.

## Patentansprüche

1. Membran-Elektrodenverbindung (MEA), die aus einer Kationenaustauschmembran besteht, die Fluor enthält, das aus hydrolisiertem Tetrafluoräthylenkopolymer mit perfluorsulfidhaltigem Vinyläther besteht, dessen EW= 900-1300 ist und dessen Elektrodenmaterialschichten aus einem Elektrokatalysator, inaktivem Elektroleitmaterial und einem fluorpolimerischen Bindemittel bestehen, das sich auf beiden Kationenaustauschmembran-oberflächen befindet. Die fluorhaltige Kationenaustauschmembran wird aus hydrolisiertem Tetrafluoräthylenkopolymer mit perfluorsulfidhaltigem Vinyläther hergestellt, dessen Kristallingrad 2-8% beträgt. Die porösen Elektrodenmaterialschichten werden mit einer Porösität von 40-70% hergestellt und, die in Richtung der Kationenaustauschmembranoberfläche mit einer Abstufung von 5-15% pro 1 m abnimmt.

2. Membran-Elektrodenverbindung wie unter Anspruch 1, wobei die fluorhaltige Kationenaustauschmembran aus hydrolisiertem Tetrafluorethylenkopolymer mit perfluorsulfidhaltigem Vinylester und einem dritten modifizierenden Monomer hergestellt wird, der aus den folgenden gewählt werden kann: Äthylen, Perfluor-2-Methylen-4-Methyl, 1, 3-Dioxolan und Perfluoralkyl Vinyläther mit Alkylgruppen C₁-C₃.

3. Membran-Elektrodenverbindung wie unter Anspruch 1 und 2, wobei die porösen Elektrodenmaterialschichten aus einer Mischung hergestellt werden, die prozentmässig in Masse folgende Bestandteile hat: 20% - 85% Elektrokatalysator, 10%-60% inaktives Elektroleitmaterial, 2% - 8% Kationenaustauschfluorkopolymer, der dem identisch ist, aus dem die Kationenaustauschmembran hergestellt wird und 3%-15% Polytetrafluoräthylen enthält

4. Membran-Elektrodenverbindung wie unter Anspruch 1 und 2, wobei die porösen Elektrodenmaterialschichten aus einer Mischung hergestellt werden, die prozentmässig in Masse folgende Bestandteile hat: 65% - 95% Elektrokatalysator, 1%-35% inaktives Elektroleitmaterial, 1% - 9% Kationenaustauschfluorkopolymer, der dem identisch ist, aus dem die Kationenaustauschmembran hergestellt wird.

5. Eine Methode zur Herstellung einer Membran-Elektrodenverbindung (MEA), die die Anwendung der Mischung aus Elektrokatalysator und inaktivem Elektroleitmaterial mit einem fluorhaltigen polymerischen Bindemittel auf beide Seiten der Kationenaustauschmembran beinhaltet. Die Kationenaustauschmembran wird aus hydrolisiertem Tetrafluoräthylen-kopolymer mit perfluorsulfidhaltigem Vinyläther mit EW= 900-1300 und durch eine Wärmebehandlung hergestellt. Die Methode zeichnet sich dadurch aus, dass auf beide Kationenaustasuchmembranoberflächen eine Mischung aus Elektrokatalysator, inaktivem Elektroleitmaterial und einer 1,5-prozentigen Lösung des Kationenaustauschfluorkopolymers, der dem identisch ist, aus dem die Kationenaustauschmembran hergestellt wird, in organischen Lösungsmitteln aufgetragen wird und die Wärmebehandlung wird durch einen Temperaturanstieg in mehreren Stufen von 20 - 35°C und 80 - 100°C durchgeführt, so dass die Porösität der Elektrodenschichten in Richtung der Kationenaustauschmembranoberfläche um 5-15% abnimmt.

6. Eine Methode zur Herstellung einer Membran-Elektrodenverbindung gemäss Anspruch 5, wobei die Kationenaustauschmembran aus hydrolisiertem Tetrafluoräthylen-kopolymer mit perfluorsulfidhaltigem Vinylester besteht und das dritte modifizierende Monomer benutzt wird, das aus den folgenden gewählt werden kann: Äthylen, Perfluor-2-Methylen-4-Methyl, 1, 3-Dioxolan und Perfluoralkyl Vinyläther mit Alkylgruppen C₁-C₃.

7. Eine Methode zur Herstellung einer Membran-Elektrodenverbindung gemäss Anspruch 5 und 6, wobei die Mischung aus Elektrokatalysator, inaktivem Elektroleitmaterial und der 1-5-prozentigen Lösung des Kationenaustauschfluorkopolymers, der mit dem Fluorkopolymer, aus dem die Kationenaustauschmembran besteht, identisch ist, mit anorganischen Lösungsmitteln vermischt wird und auf beide Seiten der Kationenaustausch-membran aufgetragen wird.

## Revendications

1. Assemblage membrane-électrode (AÉM) consistant une membrane à échange cationique contenant du fluore - faite de copolymère hydrolisé de tétrafluoroéthylène avec de l'éther vinylique contenant du perfluorosulfure avec EW = 900 - 1300 et des couches de matériau de l'électrode poreuses faites d'électrocatalyseur, de matériau inactif électroconducteur et d'agent liant fluoropolymérique situé sur les deux surfaces de la membrane à échange cationique, **caractérisé par le fait que** la membrane à échange cationique contenant du fluor est produite par un copolymère hydrolisé de tétrafluoroéthylène avec de l'éther vinylique contenant du perfluorosulfure et qu'elle possède un degré de cristallinité de 2-8% et que les couches de matériau de l'électrode poreuses sont produites avec une porosité de 40 - 70%, qui diminue dans la direction de la surface de la membrane à échange cationique avec un gradient de porosité de 5-15% pour 1 m.

2. Assemblage membrane-électrode d'après la revendication 1, **caractérisé par le fait que** la membrane à échange cationique contenant du fluor est produite par du copolymère hydrolisé de tétrafluoréthylène avec de l'éster vinylique contenant du perfluorosulfure et un troisième comonomère modifiant choisi parmi les comonomères suivants : éthylène, perfluore-2-méthylène-4-méthyl-1,3-dioxolane et éster vinylique perfluoroalkylé avec un groupe alkyl C₁ - C₃.

3. Assemblage membrane-électrode d'après les revendications 1 et 2, **caractérisé par le fait que** les couches de matériau de l'électrode poreuses sont produites par un mélange contenant (% dans la masse) 20%-85% d'électrocatalyseur, 10%-60% de matériau inactif électroconducteur, 2%-8% de fluorcopolymère à échange cationique, identique au fluorcopolymère dont est produite la membrane à échange cationique, possédant 3%-15% de polytétrafluoroéthylène.

4. Assemblage membrane-électrode d'après les revendications 1 et 2, **caractérisé par le fait que** les couches poreuses de matériau de l'électrode sont produites par un mélange contenant (% dans la masse) 65%-95% d'électrocatalyseur, 1%-35% de matériau inactif électroconducteur, 1%-9% de fluorocopolymère identique au fluorecopolymère dont est produite la membrane à échange cationique.

5. Méthode pour produire un assemblage membrane - électrode (AÉM) comprenant l'application du mélange d'électrocatalyseur et de matériau inactif électroconducteur avec un agent liant polymérique contenant du fluore sur les deux surfaces de la membrane à échange cationique, qui est produite par du copolymère hydrolisé de tétrafluoroéthylène avec de l'éther vinylique contenant du perfluorosulfure dont EW = 900 - 1300 et traitement de chaleur ; la méthode se **caractérise par le fait qu'**un mélange d' électrocatalyseur, de matériau inactif électroconducteur et de solution à 1-5% de fluorocopolymère à échange cationique, identique au fluorocopolymère dont est produite la membrane à échange cationique, dans des dissolvants organiques est appliqué aux deux surfaces de la membrane d' échange cationique et que le traitement de chaleur se fait avec une augmentation de la température en étape multiple : de 20 - 35°C à 80 - 100°C, de sorte que la porosité des couches de l'électrode diminue vers la surface de la membrane à échange cationique, à raison de 5-15% pour lm.

6. Méthode de production d'assemblage membrane-électrode d'après la revendication 5, **caractérisée par le fait que** la membrane à échange cationique est produite par du copolymère hydrolisé de tétrafluoroéthylène avec de l'éther vinylique contenant du perfluorosulfure et que l'on utilise le troisième comonomère modifiante choisi parmi les comonomères suivants : éthylène, perfluore-2-méthylène-4-méthyl-1,3-dioxolane et éther vinylique perfluoroalkylé avec groupe alkyle C₁ - C₃.

7. Méthode de production d'armure membrane-électrode d'après les revendications 5 et 6, **caractérisée par le fait que** le mélange d'électrocatalyseur, de matériau inactif électxoconducteur et de solution à 1-5% de fluorocopolymère à échange cationique, identique au fluorocopolymère avec membrane à échange cationique est produit par, est mélangé à des dissolvants inorganiques et est appliqué sur les deux côtés de la membrane à échange cationique.
